# EUROPEAN PATENT SPECIFICATION

(11) **EP 3 350 945 B1**
(45) Date of publication and mention of the grant of the patent: **06.11.2019**
(21) Application number: 16763848.5
(22) Date of filing: 13.09.2016
(51) Int. Cl.: H04B 10/61, H04B 10/69

(54) **AN OPTICAL RECEIVER WITH A CASCODE FRONT END**
OPTISCHER EMPFÄNGER MIT EINEM KASKODEN-FRONTEND
RÉCEPTEUR OPTIQUE COMPRENANT UNE BORNE AVANT D'AMPLIFICATEUR CASCODE

(30) Priority: 15.09.2015 EP 15185217
(43) Date of publication of application: 25.07.2018
(73) Proprietor: Firecomms Limited, Cork (IE)
(72) Inventor: MURPHY, Patrick, Douglas Cork (IE); DONOVAN, Colm, Leap County Cork (IE); CAHILL, Ciaran, Blarney County Cork (IE)
(74) Representative: John A. O'Brien & Associates
(86) International application number: PCT/EP2016/071528
(87) International publication number: WO 2017/046068

(56) References cited:
- US-B1- 6 307 660
- QUADIR NASIR ABDUL ET AL: "An inductorless linear optical receiver for 20Gbaud/s (40Gb/s) PAM-4 modulation using 28nm CMOS", 2014 IEEE INTERNATIONAL SYMPOSIUM ON CIRCUITS AND SYSTEMS (ISCAS), IEEE, 1 June 2014 (2014-06-01), pages 2473-2476, XP032624931, DOI: 10.1109/ISCAS.2014.6865674 [retrieved on 2014-07-24]
- CHEN W-Z ET AL: "A 1.8-V 10-Gb/s Fully Integrated CMOS Optical Receiver Analog Front-End", IEEE JOURNAL OF SOLID-STATE CIRCUITS, IEEE SERVICE CENTER, PISCATAWAY, NJ, USA, vol. 40, no. 6, 1 June 2005 (2005-06-01), pages 1388-1396, XP011133192, ISSN: 0018-9200, DOI: 10.1109/JSSC.2005.845970
- PETER OSSIEUR ET AL: "A 10 Gb/s Linear Burst-Mode Receiver in 0.25 $\mu$ m SiGe:C BiCMOS", IEEE JOURNAL OF SOLID-STATE CIRCUITS, IEEE SERVICE CENTER, PISCATAWAY, NJ, USA, vol. 48, no. 2, 1 February 2013 (2013-02-01), pages 381-390, XP011489685, ISSN: 0018-9200, DOI: 10.1109/JSSC.2012.2221211

## Description

### INTRODUCTION

### Field of the Invention

The invention relates to an optical receiver.

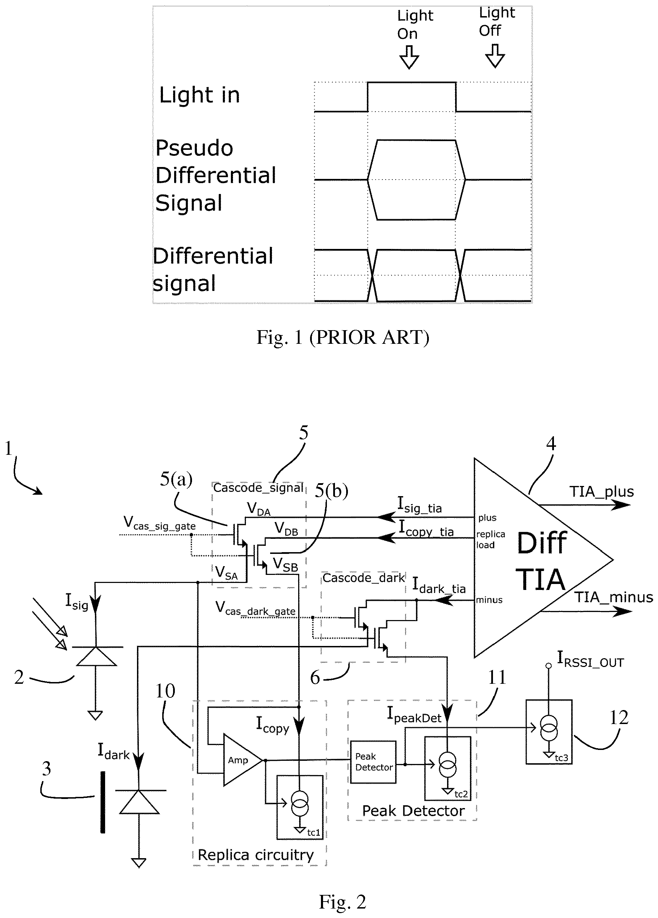

A characteristic of operating at DC (0 Mbps) is where a command can be issued optically by control circuitry via an optical transmitter. In such an instance the receiver in idle mode may be receiving a DC light level and then must respond without fail to the first bit of a command signal data stream sent at any arbitrary time within a wide received optical power range. The conversion of optical light into a voltage is usually implemented using a transimpedance amplifier (TIA). If the dynamic range of the received light power is wide then a TIA with automatic gain control (AGC) is needed to reduce the gain for higher received light power. The use of a fully differential TIA is preferred for noise and electromagnetic interference (EMI) immunity. A photodiode has a single ended current output, and a fully differential TIA outputs a pseudo differential signal, as illustrated by Fig. 1. Creating an accurate comparator reference point for a pseudo differential signal at high speed instantaneously is difficult. Using a fully differential signal into a comparator ensures that the pulse width distortion (PWD) is low, which is needed for DC to multiple MHz frequency applications.

The invention is therefore directed towards achieving a fully differential signal in a simple and effective manner.

Reference [1] describes an optical receiver that removes the DC photocurrent by feeding back the differential TIA output via an error amplifier to generate a low frequency DC rejection current. This includes a differential TIA and regulated gate cascode (RGC) but does not have an AGC. This approach does not appear to be suitable for a DC application because the differential signal is generated by feeding back the TIA outputs via an error amplifier which adds a significant lag before the differential signal is correctly generated.

The approach of Reference [2] includes a differential TIA. As the peak detector is responding to the output voltage there is significant delay before a fully differential signal is created. Hence, this approach would not be suitable for DC applications where first bit PWD is specified.

The following documents describe optical receivers:
- QUADIR NASIR ABDUL ET AL: "An inductorless linear optical receiver for 20Gbaud/s (40Gb/s) PAM-4 modulation using 28nm CMOS" 2014 IEEE INTERNATIONAL SYMPOSIUM ON CIRCUITS AND SYSTEMS (ISCAS), IEEE, 1 June 2014 (2014-06-01) pages 2473-2476.
- CHEN W-Z ET AL: "A 1.8-V 10-Gb/s Fully Integrated CMOS Optical Receiver Analog Front-End", IEEE JOURNAL OF SOLID-STATE CIRCUITS, IEEE SERVICE CENTER, PISCATAWAY, NJ, USA, vol. 40, no. 6, 1 June 2005 (2005-06-01), pages 1388-1396.
- US6307660 B1 (CORDELL ROBERT ROGER [US] ET AL).
- PETER OSSIEUR ET AL: "A 10Gb/s Linear Burst-Mode Receiver ins 0.25 mum SiGe:C BiCMOS", IEEE JOURNAL OF SOLID-STATE CIRCUITS, IEEE SERVICE CENTER, PISCATAWAY, NJ, USA, vol. 48, no. 2, 1February 2013 (2013-02-01), pages 381-390.

**References**

| | | |
|---|---|---|
| [1] | Title: | "A transimpedance amplifier with DC-coupled differential photodiode current sensing for wireless optical communications" |
| | Authors: | Bahram Zand, Khoman Phang, and David A. Johns. |
| | Published: | IEEE Conference on Custom Integrated Circuits, 2001, Pages: 455 - 458. |
| [2] | Title: | "High-speed, Burst-Mode, Packet-Capable Optical Receiver and Instantaneous Clock Recovery for Optical Bus Operation" |
| | Authors: | Yusuke Ota, Robert G. Swartz, Vance D. Archer 111, Steven K. Korotky, Mihai Banu, and Alfred E. Dunlop. |
| | Published: | JOURNAL OF LIGHTWAVE TECHNOLOGY, VOL. 12, NO. 2, FEBRUARY 1994, Pages 325- 331. |
| | Patent: | US 5430766 A, "Burst mode digital data receiver" |
| | Filing date | Aug 22, 1994 |

### SUMMARY OF THE INVENTION

We describe an optical receiver comprising a differential TIA linked with a photodiode providing a current sense signal, wherein the receiver comprises a first cascode circuit (configured to provide to the TIA a sense signal as a sense TIA input (I_{Sig_tia}) and a circuit configured to provide to the TIA a proportion of a maximum sense signal as a proportion TIA input (I_{dark_tia}, I_{peakDet_2}). There may be a replica circuit, and the first cascode circuit is configured to provide to the replica circuit a copy (I_{copy}) of the sense signal, based on replicating the TIA load, and the replica circuit is configured to provide a signal from which the proportion TIA input is derived. There may be a peak detector to peak detect said signal from the replica circuit, and the peak detector provides directly (I_{peak-Det_2}) or indirectly (I_{peak_Det}, I_{dark_tia}) said proportion TIA input.

The replica circuit may comprise a replica amplifier, a dummy transimpedance load, and a transconductance block. In one embodiment, the peak detector comprises a transconductance block.

In one embodiment, the differential TIA gain is regulated with an automatic gain control AGC loop. In one embodiment, the cascode circuit is a regulated gate cascode RGC circuit.

In one embodiment, the cascode circuit is biased with a bias current.

In one embodiment, the peak detector is configured to generate a received signal strength indicator. Preferably, the receiver comprises a transconductance block driven by the peak detector output, and a received signal strength indicator is an output of the transconductance block.

In one embodiment, the photodiode is a monolithic integrated photodiode.

In one embodiment, the peak detector provides the proportion TIA input (I_{peakDet_2}) directly into an AGC within the TIA .

In one embodiment, the peak detector comprises a transconductance component to provide a current sink signal (I_{peakDet}) for said second cascode circuit, configured to provide the proportion TIA input (I_{dark_tia}).

In one embodiment, the cascode circuits are configured to provide the proportion TIA input as half of said maximum sense signal. Preferably, the peak detector is configured to use a replicated current signal to generate half the maximum received current, and the second cascode circuit is arranged to produce a fully differential output voltage for incoming received light.

In one embodiment, the first cascode circuitis arranged to provide a generated half the maximum received current signal as a current source to the positive input to the differential TIA or as a current sink to the negative input to the differential TIA, to produce a fully differential output voltage for incoming received light.

In one embodiment, the receiver further comprises a dark photodiode or an equivalent element, and said second cascode circuit is connected to receive a signal (I_{dark}) from said dark photodiode to provide the proportion TIA input.

In one embodiment, said AGC configured to use positive and negative TIA outputs (TIA_ₚₗᵤₛ, TIA_ₘᵢₙᵤₛ) as feedback signals to dynamically modify its gain.

Preferably, the receiver further comprises a pseudo differential to differential amplifier connected at its input to an output of the TIA, said amplifier being configured to produce a fully differential output voltage for incoming received light.

In one embodiment, the TIA is configured to use said pseudo differential to differential amplifier output signals (Diff_ₚₗᵤₛ, Diff_ₘᵢₙᵤₛ) to dynamically adjust the AGC gain using feedback control.

An electronic device comprising a processing circuit and an optical receiver of any embodiment.

### Additional Statements

We also describe a receiver comprising a differential TIA linked with a transducer providing a current sense signal, wherein the receiver is configured to provide to the TIA a sense signal as a first input and a second input which is a proportion of the maximum sense signal.

In one embodiment, the second input is half of said maximum sense signal.

In one embodiment, the inputs to the TIA are via cascode circuits.

In one embodiment, the TIA is configured to provide a copy or replica of the sense signal, based on replicating the TIA load, to a replica circuit to provide said second input.

In one embodiment, the receiver comprises a peak detector to peak detect the sense signal copy.

In one embodiment, the peak detector comprises a transconductance component to provide a current signal for the second input to the TIA.

In one embodiment, the replicated current is used to generate half the maximum received current, which is connected into an input of the differential TIA via a cascode circuit, which will produce a fully differential output voltage for incoming received light.

In one embodiment, the copy signal is connected as a current source to the positive input to the differential TIA, or as a current sink to the negative input of the differential TIA, via a cascode circuit to produce a fully differential output voltage for incoming received light.

In one embodiment, the transducers comprise one or more photodiodes.

In one embodiment, a dark photodiode or an equivalent element is connected to the second input of the differential TIA via another cascode circuit.

In one embodiment, the sense signal is an input received current which is replicated, with use of a replica amplifier, a dummy transimpedance load and a transconductance block.

In one embodiment, the maximum received current is generated with a peak detector and a transconductance block.

In one embodiment, the differential TIA gain is regulated with an AGC loop.

In one embodiment, the cascode circuit is a RGC circuit.

In one embodiment, the cascode circuit is biased with a bias current.

In one embodiment, a peak detector is used to generate a received signal strength indicator.

In one embodiment, the output received signal strength indicator is the output of another transconductance block which is driven by the peak detector output

In one embodiment, a transconductance circuit, where it is included, comprises:
a first current sink with low transconductance and good accuracy for low output currents; and
a second current sink with a high transconductance and a wide dynamic range.

In one embodiment, the transconductance circuit comprises a source follower and a current sink for the source follower, in which the input is linked with the gate of the source follower and the first current sink. In one embodiment, the current sinks are configured so that at low input voltage only the low first current sink is on. In one embodiment, the source follower and the current sinks are configured so that a gate-source voltage drop across the source follower ensures that the second current sink is off until a point during which the input voltage increases at which the second current sink is switched on.

In one embodiment, in the transconductance circuit the sizing of the first and second current sinks dictates the accuracy at lower voltage and range at the high voltage, and helps to linearize the output current over the input voltage range.

In one embodiment, in the transconductance circuit each of the current sinks is a NMOS or a PMOS MOSFET device or a PNP or an NPN transistor.

In one embodiment, in the transconductance circuit a plurality of devices with low to high transconductances are connected in parallel.

In another aspect, we describe an electronic device comprising a processing circuit and a receiver as defined above in any embodiment.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a set of plots to illustrate background to the invention, as set out above;
Fig. 2 is a circuit diagram of an optical receiver of the invention;
Fig. 3 is a set of plots for operation of the optical receiver;
Fig. 4 is a diagram showing the cascode arrangement in more detail;
Fig. 5 is a diagram of a transconductance circuit used in the receiver in some embodiments;
Figs. 6 and 7 are circuit diagrams of alternative optical receivers of the invention; and
Fig. 8 is a series of plots for these receivers.

### Description of the Embodiments

Referring to Fig. 2 an optical receiver 1 comprises a signal photodiode (PD) 2, a dark PD 3, and a differential TIA 4. There are cascode circuits 5 and 6, a replica circuit 10, and a peak detector circuit 11. The output from the series combination of replica circuit 10, and a peak detector circuit 11 is provided to the TIA 4 as I_{peakDet}, which creates a reference when added to I_{dark} to produce I_{dark_tia} which creates a fully differential TIA output when compared to the data signal I_{sig_tia}.

The signal input to the TIA 4 is via the cascode device 5 which:
- receives a V_{cas_sig_gate} control signal,
- receives the PD 2 signal, I_{sig},
- receives a copied current I_{copy}, from the replica circuit 10,
- delivers a signal I_{sig_tia}to the TIA 4,
- delivers a signal I_{copy_tia} to a replica load in the TIA 4.

The reference input to the TIA 4 is via the cascode device 6 which:
- receives a control input V_{cas_dark_gate},
- receives the PD 3 reference signal I_{dark},
- receives a reference signal I_{peakDet} from the peak detector 11 and delivers a signal I_{dark} tia to the TIA 4, which is a sum of I_{dark} and I_{peakDet}.

The peak detector 11 receives an input from the replica circuit 10, and provides a feed-forward signal to the transconductance circuit (tc) tc2. This feed forward signal causes the circuit tc2 to produce an output I_{peakDet}, which is an input signal to the TIA 4, via the cascode device 6. This feedforward current creates a fully differential TIA output in combination with other inputs. Feed forward control is beneficial because of its speed in taking predefined action depending on the strength of the sense signal, which is particularly relevant in a burst mode receiver application.

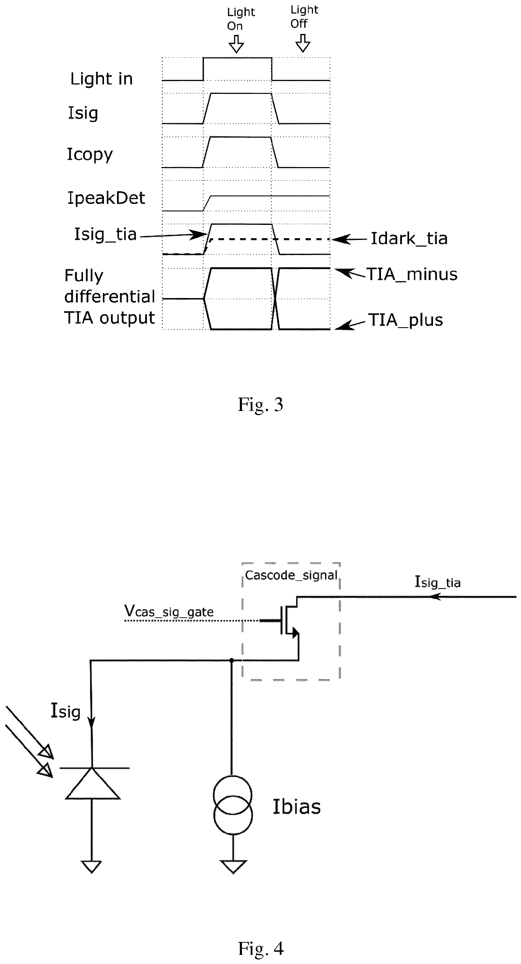

In more detail, the signal receiving photodiode 2 and the dark photodiode 3 are both connected to the cascode circuits 5 and 6 that feed into the differential TIA 4 whose gain can be regulated with an AGC control loop. A copy of the signal current is generated by the replica circuitry 10, and is used by the peak detector circuit 11 to output half the maximum input signal current. The peak detector circuit 11 output is connected to the dark (or minus) (in an alternative embodiment can be connected to the active side) side of the differential TIA 4. As illustrated in Fig. 3 supplying a differential TIA with a signal and dark current in this manner produces a fully differential output signal.

Advantageously, the TIA 4 receives a proportion TIA input which is half of the maximum signal, rather than for example being zero. This achieves a fully differential output.

The differential TIA 4 input signal current (I_{sig_tia}) is regenerated by the cascode circuit 5, where the gate source voltage is copied in the replica circuit 10 with a replica amplifier (Amp) and transconductance block tc1 produces a replica of the signal current (I_{copy}) sinked from a replica load in the TIA 4 by I_{copy_tia}.

The cascode devices 5(a) and 5(b) are used to produce a copied current I_{copy}. If the gate, source and drain voltages of the cascode device 5(a) are equal to corresponding voltages of the cascode device 5(b) then the current will be the same through both devices. The gate voltage V_{cas_sig_gate} is common to both devices. The Amp and transconductance block tc1 of the replica circuit 10 ensure that the source voltages V_{SA} and V_{SB} are the same, and the replica load input to the TIA 4(which is the same as the plus input) ensures that the drain voltage V_{DA} and V_{DB} will be the same if I_{copy} is the same as I_{sig.}

The output voltage of the Amp in the replica circuit 10 is peak detected by the peak detector circuit 11, to output half the maximum received current (I_{peakDet}) by using a transconductance block tc2 which is half the size of the transconductance block tc1. This current I_{peakDet} equals half of maximum I_{sig_tia} and is connected to the minus (or dark) side of the differential TIA via a second cascode device 6, as shown in Fig. 2. The I_{dark_tia} current is equal to the sum of the PD 3 reference I_{dark} and the peak detector current I_{peakDet}.

The benefit of providing to the TIA 4 a replica load input is that it helps to provide a stable loop for the replica circuitry 10 to reproduce the sense signal. The benefit of providing to the TIA a sense signal and a signal which is a fixed proportion of a maximum sense signal, is that this architecture produces a fully differential output TIA signal which is generated with minimum delay. It is because of this reason that this architecture is suitable for DC to multiple megabits per second (Mbps) applications. It has the advantage of processing the signal at the front end so that the bandwidth of the differential TIA 4 can be reduced for a low power receiver, and if an AGC was implemented with the TIA it would have limited implications on this architecture.

An additional aspect is that the peak detector output voltage can drive another (or multiple) transconductance block(s) tc3 to produce a Received Signal Strength Indication (RSSI) current I_{RSSI_OUT}. If the transconductance block tc3 equals tc1, then this current is an accurate copy of the received photodiode current.

Fig. 4 shows how a static bias current can be used in a cascode circuit to enhance the cascode circuit 5 to improve speed, where I_{sig_tia} = I_{sig} + I_{bias}. Likewise, this bias current would be symmetrically used in the dark cascode to enhance the circuit 6, and as a consequence its content must be removed from the peak detector current I_{peakDet}, in order for the receiver to output an accurate differential signal.

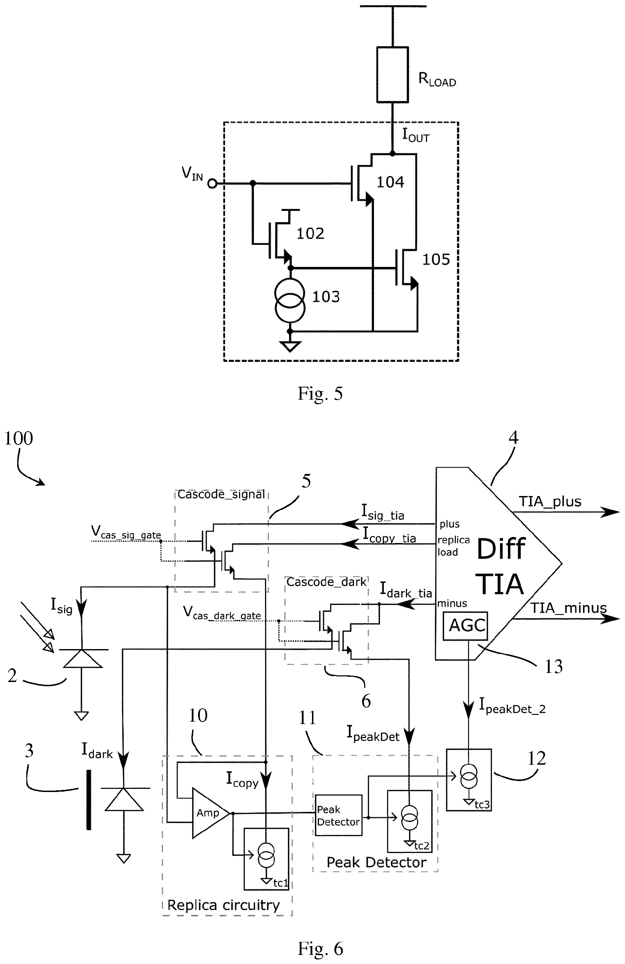

Referring to Fig. 5 a transconductance circuit is illustrated for one or more of the components tc1, tc2, or tc3. This transconductance circuit comprises a source follower 102, a current sink 103 for the source follower, a low gₘ current sink 104, and a high gₘ current sink 105. The actual gₘ are not important, the important point being that the sink 105 has a higher gₘ that the sink 104.

This transconductance circuit improves the dynamic range of a single current sink, to improve the accuracy at low output currents and ensure it has the dynamic range to output higher currents if required.

The manner in which the two current sinks 104 and 105 are connected to the inputs by the components 102 and 103 is advantageous because it combines the advantages of both a low gₘ current sink 104, and a high gₘ current sink 105 in one circuit. At low V_{IN} only the low gₘ device 4 is on, as the gate source voltage drop across the source follower (102) ensures that the high gₘ device (105) is off. As the V_{IN} increases the high gₘ device 105 is switched on. The sizing of the low gₘ and high gₘ devices 4 and 5 dictate the accuracy at lower voltage and range at the high voltage, and helps to linearize the output current over the V_{IN} range.

The components 102 and 103 provide a voltage drop for the bias of the current sinks 104 and 105, ensuring that the sink 105 turns on later. Such a voltage drop may be provided by another means such as a combination of a resistor with a current source/sink, with the use of an amplifier to buffer the input from any current dissipation.

In various embodiments, the transconductance circuit which is used may have at least two current sinks. One sink is a single current sink which is sized to have low transconductance and to have good accuracy for low output currents, but would have a poor dynamic range. The other is a single current sink sized to have high gₘ and a wide dynamic range but poor accuracy for low output current. The transconductance circuit 1 combines both of these current sinks into one circuit to achieve high accuracy for low output current, a wide dynamic range for high current, and improved the linearity across the range of output currents.

It will be appreciated that the transconductance circuit improves the dynamic range (due to the high gₘ current device), accuracy and tolerance to mismatch of the output current versus a single transconductance current sink (due to the low gₘ current device).

In the transconductance circuit the NMOS devices may be replaced with PMOS devices, so the output transconductance current sinks are now transconductance current sources. Also, the NMOS or PMOS MOSFET devices may be replaced with NPN or PNP bipolar transistors creating bipolar based output transconductance current sources or current sinks.

Also, the optical receiver 1 achieves low EMI because of the differential architecture of the TIA and subsequent stages. Another reason is that the signal processing is implemented at the front end, which allows the reduction of the TIA bandwidth in burst mode applications to filter out high frequency noise.

An optical receiver 100 of another embodiment is shown in Fig. 6. Like parts are given the same reference numerals.

In the circuit 100 there is an additional proportion TIA input to the differential TIA 4, a signal I_{peakDet_2}, from the transconductance circuit 12. This current is a proportion of the maximum sense signal. This signal provides a feed forward current to the automatic gain control (AGC) block 13. In this case a second or more inputs, which are a proportion of the maximum sense signal are provided to the TIA.

In more detail, the output of the transconductance circuit 12 is used as an input to an AGC block 13 which is incorporated in the differential TIA. Known TIAs include such AGC blocks, the difference here being the connection to it from the transconductance circuit 12. This signal, a third input current (I_{peakDet_2}), is a proportion of the maximum sense signal. This can be used to speed up the AGC using feed forward control to adjust the approximate optimal gain of the differential TIA in a pre-defined manner. The AGC 13 may use the TIA outputs TIA_plus and TIA_minus signals to dynamically adjust the AGC gain using feedback control, to attain the required output amplitude.

The main advantage of this embodiment is that for high received power the AGC 13 can quickly achieve the required differential TIA gain via feedforward control as to improve pulse width distortion (PWD) of the received data. This embodiment can be used to reduce the variation of the settling time of the AGC over process, temperature and voltage.

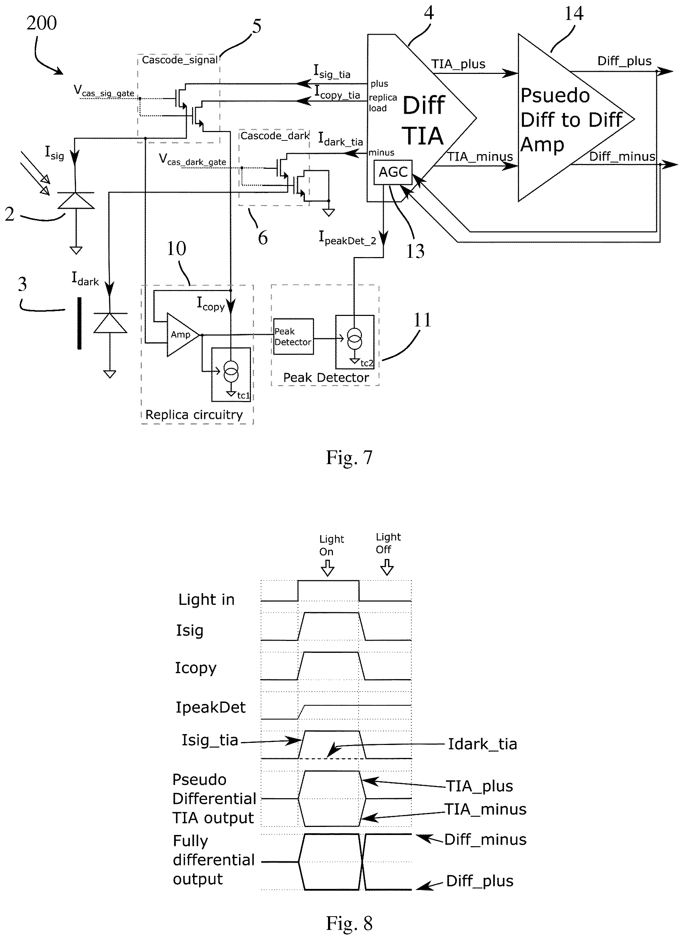

An alternative optical receiver 200, is shown in Fig. 7. Again, parts similar to those of the other embodiments are given the same reference numerals.

Again, there is a proportion TIA input to the differential TIA where it's current is a proportion of the maximum sense signal.

In the Fig. 2 embodiment the proportion TIA input (I_{dark_tia}) is used to produce a fully differential output voltage for incoming received light as the output of the peak detector 11 was fed into the second cascode device 6.

This is not the case in the optical receiver 200 (Fig. 7) embodiment as a pseudo differential to differential amplifier 14 is now used to produce a fully differential output voltage for incoming received light. This proportion TIA input (I_{peakDet_2}) to the differential TIA is used as an input to the automatic gain control (AGC) block 13 which is incorporated in the differential TIA. This input current (I_{peakDet_2}) is a proportion of the maximum sense signal. This can be used to speed up the AGC using feed forward control to adjust the approximate optimal gain of the differential TIA in a pre-defined manner.

The AGC may use the pseudo differential to differential amplifier 14 outputs Diff_plus and Diff_minus signals to dynamically adjust the AGC gain using feedback control.

Fig. 8 is a plot of the signals in the circuit 200, where the TIA output is a pseudo differential signal, and the differential signal is outputted from the pseudo differential to differential amplifier 14. Again similar to the embodiment of Fig. 6; the same advantages apply here.

An extra advantage of this embodiment is that the total accuracy of the front end maximum current sense circuitry may be relaxed depending on the accuracy needed for the feed-forward control of the AGC. The mismatch of devices and variation over temperature no longer have a large impact on PWD of the receiver output.

The invention is not limited to the embodiments described but may be varied in construction and detail. For example, the current signal may not represent a light signal, but represents another measurable signal from a transducer. The photodiode may be discrete or a monolithic integrated photodiode. The receiver may operate with transducers other than photodiodes

## Claims

1. An optical receiver comprising:
a differential TIA (4) linked with a photodiode (2, 3) providing a current sense signal,
a first cascode circuit (5(a), 5(b)) configured to provide to the TIA (4) a sense signal as a sense TIA input (I_{sig_tia}), and
a circuit configured to provide to the TIA (4) a proportion of a maximum sense signal as a proportion TIA input (I_{dark_tia}, I_{peakDet_2}),
a replica circuit (10), wherein the first cascode circuit (5(a), 5(b)) is configured to provide to the replica circuit (10) a copy (I_{copy}) of the sense signal, based on replicating the TIA load, and said replica circuit is configured to provide a signal from which said proportion TIA input is derived, and
a peak detector (11) to peak detect said signal from the replica circuit (10), and the peak detector provides directly (I_{peak-Det_2}) or indirectly (I_{peakDet}, I_{dark_tia}) said proportion TIA input.

2. An optical receiver as claimed in any of claim 1, wherein the replica circuit (10) comprises a replica amplifier (Amp), a dummy transimpedance load, and a transconductance block (tc1).

3. An optical receiver as claimed in claims 1 or 2, wherein the peak detector (11) comprises a transconductance block (tc2).

4. An optical receiver as claimed in any preceding claim, wherein the differential TIA gain is regulated with an automatic gain control AGC loop.

5. An optical receiver as claimed in any preceding claim, wherein the cascode circuit (5, 6) is a regulated gate cascode RGC circuit.

6. An optical receiver as claimed in any preceding claim, wherein the cascode circuit (5, 6) is biased with a bias current.

7. An optical receiver as claimed in in any preceding claim, wherein the peak detector (11) is configured to generate a received signal strength indicator.

8. An optical receiver as claimed in any preceding claim, wherein the receiver comprises a transconductance block (12) driven by the peak detector (11) output, and a received signal strength indicator is an output of the transconductance block (12).

9. An optical receiver as claimed in any preceding claim, wherein the photodiode is a monolithic integrated photodiode.

10. An optical receiver as claimed in any preceding claim, wherein the peak detector provides the proportion TIA input (I_{peakDet_2}) directly into an AGC within the TIA (4).

11. An optical receiver as claimed in any preceding claim, wherein the peak detector (11) comprises a transconductance component to provide a current sink signal (I_{peakDet}) for said second cascode circuit (6), configured to provide the proportion TIA input (I_{dark_tia}), and optionally the cascode circuits (6(a), 6(b)) are configured to provide the proportion TIA input as half of said maximum sense signal, and optionally the peak detector (10) is configured to use a replicated current signal to generate half the maximum received current, and the second cascode circuit (6) is arranged to produce a fully differential output voltage for incoming received light.

12. An optical receiver as claimed in claim 11, wherein the first cascode circuit (5) is arranged to provide a generated half the maximum received current signal as a current source to the positive input to the differential TIA or as a current sink to the negative input to the differential TIA, to produce a fully differential output voltage for incoming received light, and optionally the receiver further comprises a dark photodiode (3) or an equivalent element, and said second cascode circuit (6) is connected to receive a signal (I_{dark}) from said dark photodiode to provide the proportion TIA input.

13. An optical receiver as claimed in either of claims 11 or 12, wherein said AGC (13) is configured to use positive and negative TIA outputs (TIA_ₚₗᵤₛ,TIA_ₘᵢₙᵤₛ) as feedback signals to dynamically modify its gain.

14. An optical receiver as claimed in any preceding claim, wherein the receiver further comprises a pseudo differential to differential amplifier (14) connected at its input to an output of the TIA (4), said amplifier being configured to produce a fully differential output voltage for incoming received light, and optionally the TIA (4) is configured to use said pseudo differential to differential amplifier (14) output signals (Diff_ₚₗᵤₛ, Diff_ₘᵢₙᵤₛ) to dynamically adjust the AGC gain using feedback control.

15. An electronic device comprising a processing circuit and an optical receiver as claimed in any preceding claim.

## Patentansprüche

1. Optischer Empfänger, der Folgendes umfasst:
einen Differential-TIA (4), der mit einer Fotodiode (2, 3) verknüpft ist, die ein Stromerfassungssignal bereitstellt,
eine erste Kaskodenschaltung (5(a), 5(b)), konfiguriert zum Anlegen eines Erfassungssignals an den TIA (4) als Erfassungs-TIA-Eingang (I_{sig_tia}), und
eine Schaltung, konfiguriert zum Anlegen einer Proportion eines maximalen Erfassungssignals an den TIA (4) als Proportional-TIA-Eingang (Idark_tia, I_{peakDet_2}),
eine Replikatschaltung (10), wobei die erste Kaskodenschaltung (5(a), 5(b)) zum Anlegen einer Kopie (I_{copy}) des Erfassungssignals an die Replikatschaltung (10) auf der Basis einer Replizierung der TIA-Last und die genannte Replikatschaltung zum Bereitstellen eines Signals konfiguriert ist, von dem der genannte Proportional-TIA-Eingang abgeleitet ist, und
einen Spitzendetektor (11) zum Erkennen der Spitze des genannten Signals von der Replikatschaltung (10), wobei der Spitzendetektor den genannten Proportional-TIA-Eingang direkt (I_{peak-Det_2}) oder indirekt (I_{peakDet}, I_{dark_tia}) bereitstellt.

2. Optischer Empfänger nach Anspruch 1, wobei die Replikatschaltung (10) einen Replikatverstärker (Amp), eine Dummy-Transimpedanzlast und einen Transkonduktanzblock (tc1) umfasst.

3. Optischer Empfänger nach Anspruch 1 oder 2, wobei der Spitzendetektor (11) einen Transkonduktanzblock (tc2) umfasst.

4. Optischer Empfänger nach einem vorherigen Anspruch, wobei die Differential-TIA-Verstärkung mit einem AGC-(Automatic Gain Control)-Kreis reguliert wird.

5. Optischer Empfänger nach einem vorherigen Anspruch, wobei die Kaskodenschaltung (5, 6) eine RGC-(Regulated Gate Cascode)-Schaltung ist.

6. Optischer Empfänger nach einem vorherigen Anspruch, wobei die Kaskodenschaltung (5, 6) mit einem Vorspannungsstrom vorgespannt wird.

7. Optischer Empfänger nach einem vorherigen Anspruch, wobei der Spitzendetektor (11) zum Erzeugen eines Empfangssignalstärkeindikators konfiguriert ist.

8. Optischer Empfänger nach einem vorherigen Anspruch, wobei der Empfänger einen vom Ausgang des Spitzendetektors (11) angesteuerten Transkonduktanzblock (12) umfasst und ein Empfangssignalstärkeindikator ein Ausgang des Transkonduktanzblocks (12) ist.

9. Optischer Empfänger nach einem vorherigen Anspruch, wobei die Fotodiode eine monolithische integrierte Fotodiode ist.

10. Optischer Empfänger nach einem vorherigen Anspruch, wobei der Spitzendetektor den Proportional-TIA-Eingang (I_{peakDet_2}) direkt an eine AGC im TIA (4) anlegt.

11. Optischer Empfänger nach einem vorherigen Anspruch, wobei der Spitzendetektor (11) eine Transkonduktanzkomponente zum Bereitstellen eines Stromsenkensignals (I_{peakDet}) für die genannte zweite Kaskodenschaltung (6) umfasst, konfiguriert zum Bereitstellen des Proportional-TIA-Eingangs (I_{dark_tia}), und die Kaskodenschaltungen (6(a), 6(b)) optional zum Bereitstellen des Proportional-TIA-Eingangs als die Hälfte des genannten maximalen Erfassungssignals konfiguriert sind, und der Spitzendetektor (10) optional zum Benutzen eines replizierten Stromsignals konfiguriert ist, um die Hälfte des maximalen empfangenen Stroms zu erzeugen, und die zweite Kaskodenschaltung (6) zum Produzieren einer voll differentialen Ausgangsspannung für eingehendes empfangenes Licht ausgelegt ist.

12. Optischer Empfänger nach Anspruch 11, wobei die erste Kaskodenschaltung (5) zum Anlegen einer erzeugten Hälfte des maximalen empfangenen Stromsignals als Stromquelle an den positiven Eingang zum Differential-TIA oder als Stromsenke an den negativen Eingang zum Differential-TIA ausgelegt ist, um eine voll differentiale Ausgangsspannung für eingehendes empfangenes Licht zu produzieren, und der Empfänger optional ferner eine dunkle Fotodiode (3) oder ein äquivalentes Element umfasst und die genannte zweite Kaskodenschaltung (6) zum Empfangen eines Signals (I_{dark}) von der genannten dunklen Fotodiode geschaltet ist, um den Proportional-TIA-Eingang bereitzustellen.

13. Optischer Empfänger nach Anspruch 11 oder 12, wobei die genannte AGC (13) zum Benutzen von positiven und negativen TIA-Ausgängen (TIA_ₚₗᵤₛ, TIA_{_minus}) als Rückmeldesignale zum dynamischen Modifizieren seiner Verstärkung konfiguriert ist.

14. Optischer Empfänger nach einem vorherigen Anspruch, wobei der Empfänger ferner einen Pseudo-Differential-zu-Differential-Verstärker (14) umfasst, der an seinem Eingang mit dem Ausgang des TIA (4) verbunden ist, wobei der genannte Verstärker zum Produzieren einer voll differentialen Ausgangsspannung für eingehendes empfangenes Licht konfiguriert ist und der TIA (4) optional zum Benutzen der genannten Ausgangssignale (Diff_ₚₗᵤₛ, Diff_ₘᵢₙᵤₛ) des genannten Pseudo-Differential-zu-Differential-Verstärkers (14) konfiguriert ist, um die AGC-Verstärkung mit Rückmeldesteuerung dynamisch zu justieren.

15. Elektronisches Gerät, das eine Verarbeitungsschaltung und einen optischen Empfänger nach einem vorherigen Anspruch umfasst.

## Revendications

1. Un récepteur optique comprenant :
un TIA (Amplificateur de transimpédance) différentiel (4) lié à une photodiode (2, 3) fournissant un signal de détection de courant, un premier circuit cascode (5(a), 5(b)) configuré pour fournir au TIA (4) un signal de détection en tant qu'entrée de TIA de détection (I_{sig}_ₜᵢₐ), et
un circuit configuré pour fournir au TIA (4) une proportion d'un signal de détection maximum en tant qu'entrée de TIA de proportion (Idark_tia, I_{peakDet_2}),
un circuit de réplication (10) dans lequel le premier circuit cascode (5(a), 5(b)) est configuré pour fournir au circuit de réplication (10) une copie (I_{copy}) du signal de détection, sur la base de la réplication de la charge de TIA, et ledit circuit de réplication est configuré pour fournir un signal à partir duquel ladite entrée de TIA de proportion est dérivée, et
un détecteur de pic (11) pour détecter les pics dudit signal en provenance dudit circuit de réplication (10), et le détecteur de pic fournit directement (I_{peak-Det_2}) ou indirectement (I_{peakDet}, I_{dark_tia}) ladite entrée de TIA de proportion.

2. Un récepteur optique selon la revendication 1, dans lequel le circuit de réplication (10) comprend un amplificateur de réplication (Amp), une charge de transimpédance factice et un bloc de transconductance (tc1).

3. Un récepteur optique selon la revendication 1 ou 2, dans lequel le détecteur de pic (11) comprend un bloc de transconductance (tc2).

4. Un récepteur optique selon une quelconque revendication précédente, dans lequel le gain de TIA différentiel est régulé avec une boucle AGC à contrôle de gain automatique.

5. Un récepteur optique selon une quelconque revendication précédente, dans lequel le circuit cascode (5, 6) est un circuit RGC cascode à porte régulée.

6. Un récepteur optique selon une quelconque revendication précédente, dans lequel le circuit cascode (5, 6) est polarisé avec un courant de polarisation

7. Un récepteur optique selon une quelconque revendication précédente, dans lequel le détecteur de pic (11) est configuré pour générer un indicateur d'intensité de signal reçu.

8. Un récepteur optique selon une quelconque revendication précédente, le récepteur comprenant un bloc de transconductance (12) entraîné par la sortie du détecteur de pic (11), et un indicateur d'intensité du signal reçu est une sortie du bloc de transconductance (12).

9. Un récepteur optique selon une quelconque revendication précédente, dans lequel la photodiode est une photodiode intégrée monolithique.

10. Un récepteur optique selon une quelconque revendication précédente, dans lequel le détecteur de pic fournit l'entrée de TIA de proportion (I_{peakDet_2}) directement dans un ACG à l'intérieur du TIA (4).

11. Un récepteur optique selon une quelconque revendication précédente, dans lequel le détecteur de pic (11) comprend un composant de transconductance pour fournir un signal d'écoulement de courant (I_{peakDet}) pour ledit deuxième circuit cascode (6), configuré pour fournir l'entrée de TIA de proportion (I_{dark_tia}), et éventuellement les circuits cascode (6(a), 6(b)) sont configurés pour fournir l'entrée de TIA de proportion en tant que moitié dudit signal de détection maximum, et éventuellement le détecteur de pic (10) est configuré pour utiliser un signal de courant répliqué pour générer la moitié du courant reçu maximum, et le deuxième circuit cascode (6) est disposé pour produire une tension de sortie entièrement différentielle pour la lumière reçue entrante.

12. Un récepteur optique selon la revendication 11, dans lequel le premier circuit cascode (5) est disposé pour fournir un signal de moitié du maximum de courant reçu généré en tant que source de courant à l'entrée positive du TIA différentiel ou en tant qu'écoulement de courant à l'entrée négative du TIA différentiel, pour produire une tension de sortie entièrement différentielle pour la lumière reçue entrante, et éventuellement le récepteur comprend en sus une photodiode aveugle (3) ou un élément équivalent, et ledit deuxième circuit cascode (6) est connecté pour recevoir un signal (I_{dark}) de ladite photodiode aveugle pour fournir l'entrée du TIA de proportion.

13. Un récepteur optique selon une quelconque revendication 11 ou 12, dans lequel ledit AGC (13) est configuré pour utiliser les sorties positive et négative de TIA (TIA_ₚₗᵤₛ, TIA_ₘᵢₙᵤₛ) en tant que signaux de retour pour modifier dynamiquement son gain.

14. Un récepteur optique selon une quelconque revendication précédente, dans lequel le récepteur comprend en sus un amplificateur de pseudo-différentiel à différentiel (14) connecté à son entrée à une sortie du TIA (4), ledit amplificateur étant configuré pour produire une tension de sortie entièrement différentielle pour la lumière reçue entrante, et éventuellement le TIA (4) est configuré pour utiliser lesdits signaux de sortie (DIFF_ₚₗᵤₛ, DIFF_ₘᵢₙᵤₛ) dudit amplificateur de pseudo-différentiel à différentiel (14) pour ajuster dynamiquement le gain de CAG par commande de retour.

15. Un dispositif électronique comprenant un circuit de traitement et un récepteur optique selon une quelconque revendication précédente.
